(19) Europäisches Patentamt

European Patent Office

Office européen des brevets

(11) **EP 1 173 001 A2**

(12) **EUROPEAN PATENT APPLICATION**

(43) Date of publication:
**16.01.2002 Bulletin 2002/03**

(51) Int Cl.⁷: **H04N 1/32**

(21) Application number: **01202496.4**

(22) Date of filing: **29.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.07.2000 US 613989**

(71) Applicant: **EASTMAN KODAK COMPANY
Rochester, New York 14650 (US)**

(72) Inventor: **Honsinger, Chris W.
Rochester, New York 14650-2201 (US)**

(74) Representative:
**Lewandowsky, Klaus, Dipl.-Ing. et al
Kodak Aktiengesellschaft, Patentabteilung
70323 Stuttgart (DE)**

(54) **Authenticatable image with an embedded image having a discernible physical characteristic**

(57) A method is disclosed for printing an authenticatable image having an embedded image into a receiver having a discernible physical characteristic, such that the printed image can be used to authenticate the receiver includes scanning the receiver to produce information related to the discernible physical characteristic of the receiver, and providing a carrier which includes information related to the scanned receiver discernible physical characteristic. The method also includes combining the carrier with an input image to form the authenticatable image having the embedded image, and printing the authenticatable image having the embedded image onto the receiver.

FIG. 3

**Description**

The invention relates generally to the field of image processing, and in particular to providing a secure document such as a passport, event ticket, currency, or a postal stamp, coupon or envelope.

Counterfeiting of currencies costs honest people billions of dollars each year. An article from the Hardcopy Observer, "Pitney Postage Plan Wins Approval, Escher Tries New Approach", January 2000 announces a technology that enhances the security of postage documents by forming a signature of the paper fiber over a localized region and then printing this signature elsewhere on the envelope in the form of wavy lines.

Since the image obtained from scanning paper fiber is random, it is very likely that no two envelopes ever have or ever will possess the same fiber structure. Therefore, every envelope may be considered to have a unique identifier and may be used to uniquely identify every letter. The technique requires that the fiber signature be printed and encoded as a series of wavy lines elsewhere on the envelope. How the fiber signature is distilled from the fibrous region is not disclosed. The reason that the method is compelling is that it is unlikely that a counterfeiter would discover the process needed to duplicate this process. Simply copying the envelope is not sufficient because modern copiers do not copy the fibrous structure. The copier resolution is simply not high enough. By providing an information channel directly related to the unique aspects of the paper itself, the ability to counterfeit is minimized.

However, the technique described above has a significant shortcoming. The requirement that the fibrous signature be printed as an isolated series of wavy lines is esthetically restrictive.

It is an object of the present invention to provide a cryptographically secure method for invisibly hiding (or embedding) a message derived using a texturally derived signature in an arbitrary printed image on an envelope or other receiver, reducing the need for a visible representation of the fibrous data to authenticate an image.

This object is achieved by a method for printing an authenticatable image having an embedded image into a receiver having a discernible physical characteristic, such that the printed image can be used to authenticate the receiver, comprising the steps of:

   a) scanning the receiver to produce information related to the discernible physical characteristic of the receiver;
   b) providing a carrier, which includes information, related to the scanned receiver discernible physical characteristic;
   c) combining the carrier with an input image to form the authenticatable image having the embedded image; and
   d) printing the authenticatable image having the embedded image onto the receiver.

The present invention is directed at overcoming the ability to counterfeit a paper, plastic or film based receiver. According to one aspect of the present invention, a method is disclosed that encrypts and imprints a unique physical attribute of a region of a receiver onto another region of the receiver. At the time of authentication of the document, the physical attribute is again measured and compared to the imprinted region. If they match, the receiver is declared authentic, if they do not match the receiver is declared suspicious.

According to another aspect of the present invention, a carrier signal is derived by forming a high-resolution scan of a region of the receiver. The carrier derived will reflect the discernable random or textural characteristics of the receiver, that is, a unique signature of the receiver. Regions of the carrier signal, in a preferred embodiment, are then spatially rearranged in accordance with an encryption key. The encryption key may be kept secret by an authority. The resulting rearranged carrier is processed to a different resolution so that it may be printed without much information loss according to the printer. This carrier is then used to carry additional information by convolving the carrier with a message image to form a dispersed message. Using the printer, the dispersed message is printed directly on the receiver or is printed in combination with another (possibly personalized) image.

The resulting printed receiver may then be used as a currency, a certificate of authenticity, postage, passport, credit card, forensic document, or any other commerce vehicle requiring high security.

At the time of authentication, the receiver is scanned in the same two places at their respective resolutions. The scanned carrier region is rearranged in accordance with the decryption key and is correlated with the scan containing the message. The result of the correlation is the message image. If the contents of the message image are discernable, the receiver must be authentic because it is unlikely that two high-resolution scans of the receiver could produce the same rearranged carrier.

These and other aspects, objects, features, and advantages of the present invention will be more clearly understood and appreciated from a review of the following detailed description of the preferred embodiments and appended claims, and by reference to the accompanying drawings.

   FIG. 1 shows, in a side by side fashion, a binary message image having +1's and -1's and an iconic message image as an edge map depicting a Kodak logo;
   FIG. 2 is a graph, which depicts the Fourier amplitude vs. the frequency of an optimally designed carrier;

FIG. 3 shows an embedded image of a license plate with its edge map;

FIG. 4 shows an altered license plate image wherein the second "M" is replaced with a "D";

FIG. 5 shows an envelope containing a scan area and a picture used to hide the secure embedded data;

FIG. 6 is a block diagram showing the steps needed to form the message image needed to practice the invention;

FIG. 7 depicts a block diagram form the process of forming a carrier in accordance with the present invention;

FIG. 8 depicts, in block diagram form, the shaped rearranged carrier convolved with the message;

FIG. 9 shows that subregions can be scanned from isolated regions separately; and

FIG. 10 depicts the process, in block diagram form, of extracting the embedded message from a tiled image on the receiver using weighted sums.

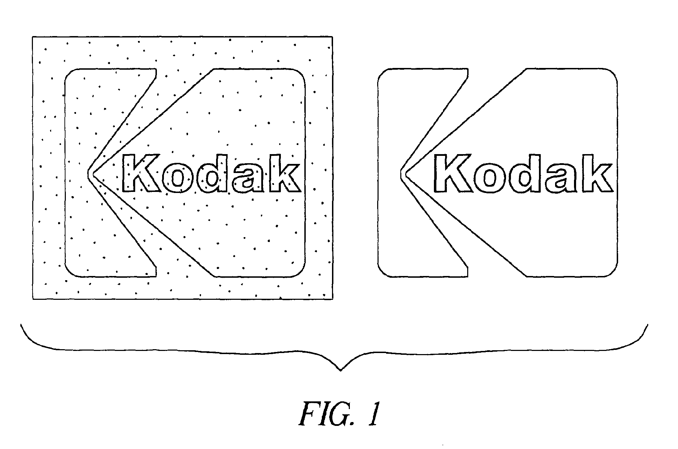

The invention utilizes aspects of data embedding. The science of data embedding is also referred to as data hiding, information hiding, data embedding, watermarking and steganography. A preferred data embedding technique is disclosed in US-A-6,044,156. Here, an original image is represented as the two-dimensional array, $I(x,y)$, the embedded image, $I'(x,y)$, and a carrier is defined as $C(x,y)$. A message that is embedded, $M(x,y)$, in its most general form is an image. The message can represent an icon, for example, a trademark, or may represent the bits in a binary message. In the latter case the on and off states of the bits are represented as plus and minus ones, or positive and negative delta functions (spikes) which are placed in predefined and unique locations across the message image. An example of a binary and an iconic message image is shown in FIG. 1. Examples of iconic data types are trademarks, corporate logos or other arbitrary images. Performance generally decreases as the message energy increases so edge maps of the icons are used. Examples of binary data types are 32 bit representations of URL's, and copyright ID codes, or authentication information.

With these definitions the preferred embedding equation is:

$$I'(x,y) = \alpha(M(x,y) * C(x,y)) + I(x,y), \tag{1}$$

where the symbol, $*$, represents circular convolution and $\alpha$ is an arbitrary constant chosen to make the embedded energy simultaneously invisible and robust to common processing. From Fourier theory, spatial convolution in the frequency domain is the same as adding phase while multiplying magnitudes. Therefore, the effects of combining the message with a carrier, such as by the described convolution technique, distributes the message energy in accordance with the phase of the carrier and to modulate the amplitude spectrum of the message with the amplitude spectrum of the carrier. If the message were a single delta function and the carrier of random phase and of uniform Fourier magnitude, the effect of convolving with the carrier would be to distribute the delta function over space. Similarly, the effect of convolving a message with a random phase carrier is to spatially disperse the message energy.

The preferred extraction process is to correlate with the same carrier used to embed the image:

$$I'(x,y) \otimes C(x,y) = \alpha(M(x,y) * C(x,y)) \otimes C(x,y) \\ + I(x,y) \otimes C(x,y), \tag{2}$$

where the symbol, $\otimes$, represents circular correlation. Correlation is similar to convolution in that Fourier magnitudes also multiply. In correlation, however, phase subtracts. Therefore, the phase of the carrier subtracts on correlation of the embedded image with the carrier leaving the message. Indeed, assuming that the carrier is designed to have uniform Fourier amplitude, then, and the process of correlation of the carrier on the embedded image Eq. 2, can be reduced to:

$$I'(x,y) \otimes C(x, y) = \alpha M(x,y) + noise \tag{3}$$

That is, the process of correlation of the embedded image with the carrier reproduces the message image plus noise due to the cross correlation of the image with the carrier.

Tiling the dispersed message on the original image improves the robustness of the algorithm. For this invention, a single 256x256 dispersed message is tiled over the entire image. Upon extraction, each 256x256 region is aligned and summed to produce the final message.

The extracted message is denoted as $M'(x,y)$, one can rewrite the equations for extracting the message (Eq. 2 and Eq. 3 ), above as:

$$M'(x,y) = \alpha M(x,y) * (C(x,y) \otimes C(x,y)) + noise \qquad (4)$$

The above equation suggests that the resolution of the extracted message is fundamentally limited by the autocorrelation function of the carrier, $C(x,y) \otimes C(x,y)$. Any broadening of $C(x,y) \otimes C(x,y)$ from a delta function will blur the extracted message when compared to the original message. Another way to view the effect of the carrier on the extracted message is to consider $C(x,y) \otimes C(x,y)$ as a point spread function, since convolution of the original message with $C(x,y) \otimes C(x,y)$ largely determines the extracted message.

The design of the carrier should consider both the visual detectability of the embedded signal and the expected signal quality at the extraction step. There is clearly a design tradeoff between achieving optimum extracted signal quality and embedded signal invisibility.

A carrier designed for optimal extracted signal quality will possess increasing amplitude with increasing spatial frequency. This may be derived from the well-known characteristic of typical images that the Fourier amplitude spectrum falls as the inverse of spatial frequency. At low spatial frequencies, where typical images have their highest energy and influence on the extracted image, our carrier uses this result. In particular, the mean or DC frequency amplitude of our carrier is always zero. As spatial frequency is increased, the carrier amplitude envelope smoothly increases with increasing spatial frequency until about 1/16 to 1/5 Nyquist.

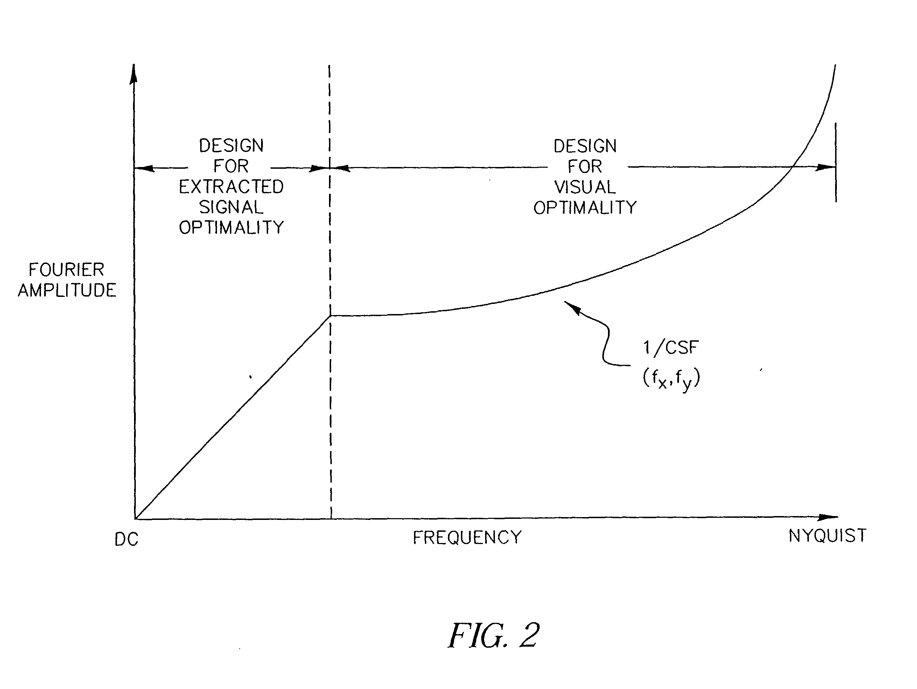

For frequencies greater than this, the carrier envelope is derived from a Contrast Sensitivity Function (CSF). A graph representing a one-dimensional slice of the Fourier amplitude of such a carrier is depicted in FIG. 2. Use of the CSF in an image embedding application is described in greater detail in US-A-5,905,819.

The CSF provides a measure of the sensitivity of the average observer to changes in contrast at a given spatial frequency. The reciprocal of the CSF can be used to prescribe the amount of amplitude needed for the embedded signal to be detectable by an average viewer. Many modern CSF models facilitate for observer viewing distance, background noise, receiver dot density, color component wavelength and other factors.

Use of these CSF parameters can be an advantage when optimizing an embedding algorithm for a specific application. One particularly useful way of sizing the embedding algorithm for a specific system is to define the quality of the embedded signal in terms of the viewing distance at which the embedded signal can be visually detected. Once this is defined, an optimized carrier can be immediately derived and tested.

For a binary message, the impact of this carrier envelope is to produce a very small sidelobe around each delta function. It may be argued that the sidelobes rob the algorithm of bandwidth. However, it has been found that the destructive processes of compression, error diffusion, printing and scanning have a far greater influence on the bandwidth of the algorithm. In a binary message, these destructive processes are the limiting factor of the bit density and can be thought of as defining the minimum separation distance between the delta functions. So long as the sidelobes are confined within half of the minimum bit separation distance, sidelobe interference may be considered minimal.

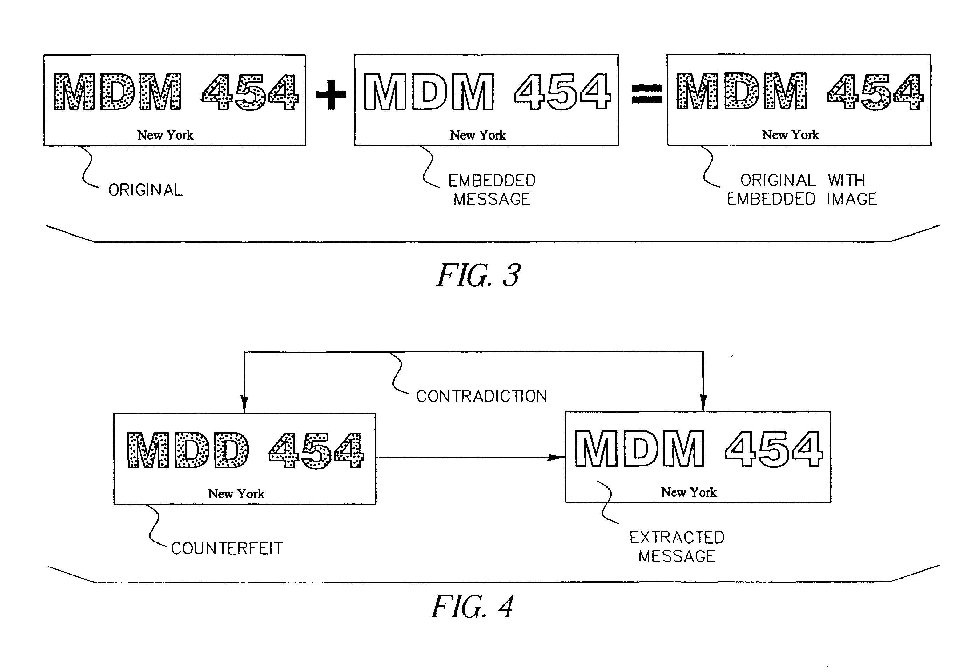

The top row of FIG. 3, shows the embedding of an image of a license plate with its edge map. The original license plate is "MDM 454" and the edge map that is embedded also shows "MDM 454". FIG. 4 shows an altered license plate image wherein the second "M" is replaced with a "D". If this image were embedded with the edge map as in FIG. 3, the original lettering would be recoverable, providing a unique form of authentication.

Correcting for rotation, scaling and skew is a fundamental element of all robust data embedding techniques. In US-A-5,835,639, Method for detecting rotation and magnification in images, a preferred method of correction of rotation and scale is provided. The correction technique relies on autocorrelation the embedded image. For example, upon autocorrelation of an embedded image that has not been rotated or scaled, one would expect to see correlation peaks spaced horizontally and vertically at intervals of 256 pixels and 256 lines. At the zero offset correlation point, there is a very high peak due to the image correlating with itself.

Now, if the embedded image is scaled, the peaks must scale proportionately. Similarly, if the embedded image is rotated, the peaks must rotate by the same amount. Therefore, the rotation and scale of an image can be deduced by locating the autocorrelation peaks. Detection of the actual rotation angle $\theta$ is limited to angles in the range $(-45°, +45°]$. However, the actual rotation angle will be a member of the set $\theta_{actual} = \theta_{calculated} \pm n90°$, where n is an integer. Because of the possibility that the image has been flipped or rotated in increments of 90 degrees during the message extraction process, this ambiguity is not a fundamental limitation.

The effect of the autocorrelation properties of the original image can be significant. Without ancillary processing, high amplitude low frequency interference in the autocorrelation image can make the process of detecting peaks difficult. To minimize this problem, localized first order and second order moment normalization on the embedded image before the autocorrelation. This process consists of replacing each pixel in the image with a new pixel value, $v_{new}$:

$$v_{new} = \frac{\sigma_{desired}}{\sigma_{old}}(v_{old} - m_{old}) \qquad (6)$$

4

where $v_{old}$, is the original pixel value, $m_{old}$, is the local mean of the image, $\sigma_{desired}$ is the desired standard deviation, which is generally set to the expected embedded signal standard deviation and $\sigma_{old}$ is the local standard deviation. Because this operation is over a small area, typically over a (3x3) or (5x5) region, its effect in removing the high amplitude, low frequency coherent noise is quite substantial. For the limiting case when $\sigma_{old} \to o$, $v_{new}$ is equated to a value taken from a random noise generator having a standard deviation $\sigma_{desired}$.

The next piece of ancillary processing performed is to shape the autocorrelation peaks. This is done during the FFT operation used in the autocorrelation processing. A function that increases linearly with spatial frequency in the Fourier magnitude domain is quite satisfactory. This function is consistent with a Wiener filter designed to maximize the semblance of the correlation peaks to delta functions under the assumption that the image Fourier amplitude spectrum exhibits an asymptotic "1/(spatial frequency)" falloff. Following these processing steps produces peaks that need little further processing.

Importantly, because autocorrelating the embedded image requires no extra calibration signal, it does not tax the information capacity of the embedding system. In addition, this technique can be applied to any embedding technique with redundant embedded signals and may implemented on a local level to confront low order geometric warps.

The ability to recover from cropping is an essential component of a data embedding algorithm.

Indeed, if the origin of the 256x256 extracted region was a distance, ($\Delta x, \Delta y$), from its nearest "original" origin, then the extracted message, $M'(x,y)$ can be written as:

$$M'(x,y) = M(x,y) * \delta(x - \Delta x, y - \Delta y) \qquad (7)$$

where it has been assumed that the convolution is circular, that the carrier autocorrelated to a delta function and that the image contributes no noise.

On the surface, this circular shift ambiguity is a severe limitation on data capacity because it imposes the constraint that the message structure must be invariant to cyclic shifts. However, the present invention provides a way around this by placing the bits in the message in a special manner. First, there is required the use of a *message template*, that is, a prescription of where to place the bits in a message image. The message template is derived by placing positive delta functions on a blank 256x256 image such that each delta function is located a minimum distance away from all others and such that the autocorrelation of the message template yields as close as possible, a delta function. That is, the bits are placed such that the message template autocorrelation sidelobes are of minimal amplitude.

Now, correlation of the extracted region with a zero mean carrier guarantees that the extracted circularly shifted message $M'(x,y)$ is also zero mean. If the message template is called, $T(x,y)$, then the absolute value of the the extracted template must be practically equivalent to a circularly shifted message template. That is,

$$|M'(x,y)| = T(x,y) * \delta(x - \Delta x, y - \Delta y) \qquad (8)$$

This implies, due to the autocorrelation property of the message template, that the shift from the origin of the message can be derived by correlating $|M'(x,y)|$ with $T(x,y)$, since:

$$|M'(x,y)| \otimes T(x,y) = \delta(x - \Delta x, y - \Delta y) \qquad (9)$$

Therefore, the result of the correlation will be a 256x256 image, whose highest peak will be located at the desired shift distance, ($\Delta x, \Delta y$). This peak location can be used to correctly orient the interpretation of the embedded bits.

An embodiment of the present invention could be when the receiver is paper and the paper is a postal envelope. It should, however, be appreciated that virtually any media will suffice as a receiver so long as it has a discernible physical characteristic which is subject to a high resolution scan for producing a carrier.

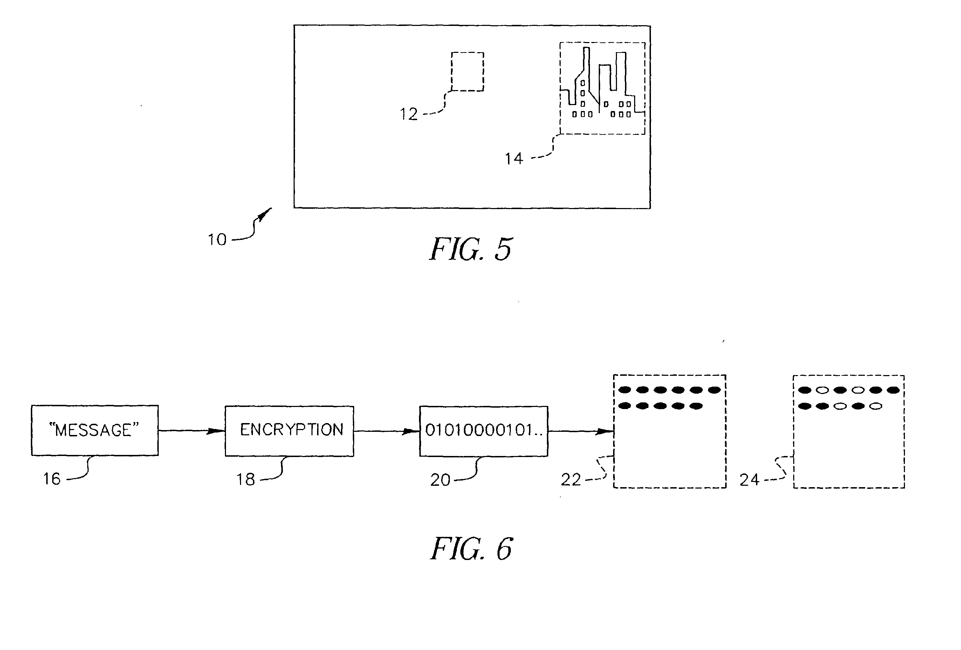

In accordance with the present invention, the method of printing an authenticatable image having an embedded image onto a receiver will now be described in more detail. FIG. 5 shows a medium, such as a medium 10, containing a scan area 12, and a picture used to hide the secure embedded image 14. FIG. 6 is a block diagram showing the steps needed to form the message image needed to practice the invention using the technique outlined above. The message, shown in block 16, should contain information such as postage. If the message only contained postage, say 33 cents, and if the maximum postage allowed for the size of the envelope was $2.56, then eight bits ($2^8 = 256$) of information would be needed to convey all postage amounts. However, our experience with the algorithm has shown that performance is not substantially degraded when using 32 or 64 bits, when compared to 8 bits, providing a much greater number level of possibilities. Once the message has been expressed in its binary form, it is possible to encrypt, as shown in block 18, by using any desired encryption algorithm. After the encryption, the bits shown in block 20 are placed on a message template 22 according to an arbitrary bit placement rule. As a preferred embodiment, assuming one takes the first bit and place it on the message template in the topmost and leftmost possible position. If the first bit is a 1, the value 1 is disposed in a first position. If the bit is a zero, the value a -1 in the first position. The next bit from 20 is placed in the next top most left most position available, using the same rules for polarity. This process continues in this fashion until all bits placed yielding the message image 24.

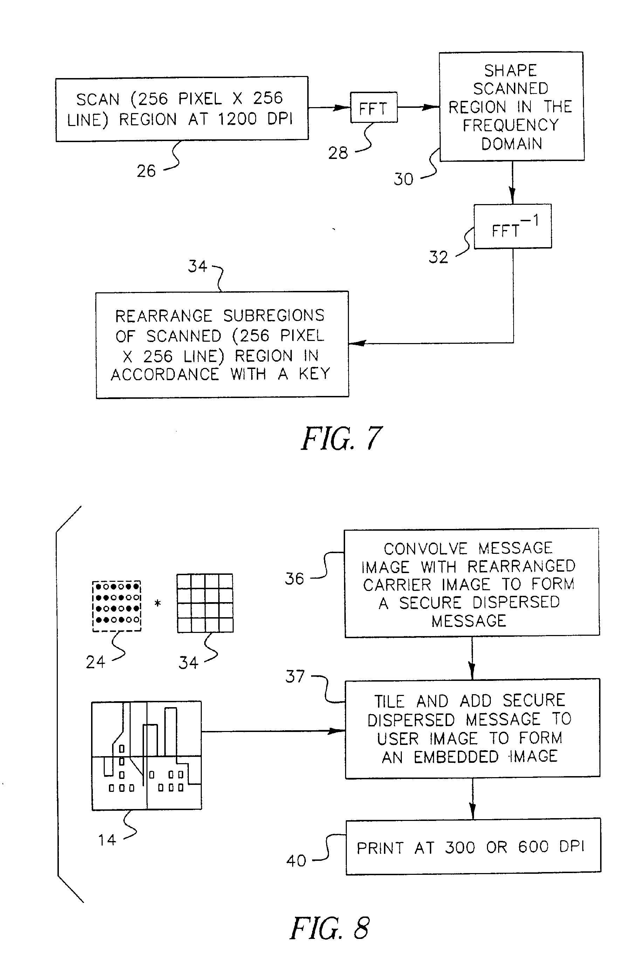

The message image needs to be convolved with the carrier derived from the fibrous character of the paper. The process of forming a carrier is depicted in FIG. 7. Scan area 12 is scanned at a high resolution in block 26. In a preferred embodiment, the area is scanned at 1200 dpi. This results in a region that is only 0.21 inches wide x 0.21 inches in height, which for some applications may be too small. If this is the case, a larger region may be used for the carrier or message size. Once this image is obtained it is transformed to the Fourier domain as shown in block 28. The objective of the shaping step as shown in block 30 is to provide a carrier that maintains the fibrous character of the scan, but also provides an efficient information carrying entity. This shaping process will be described in detail below. After the shaping, the image is inverse Fourier transformed in block 32 to form a shaped carrier. In a preferred embodiment, the shaped carrier is rearranged in block 34. The rearrangement step is intended to provide an additional level of security. Specifically, because a counterfeiter might determine the region of the paper where the carrier is derived either by the users explicit use of fiducials or by trial and error, rearrangement of the data in the shaped carrier is an important security measure. As a preferred embodiment, the shaped scanned carrier is divided into 16 equal area regions. Each of the subregions (64x64) is placed into a different place in the carrier image. It is important to make sure that there are no blank areas. One way to think of this is to construct a blank 256x256 image. Next, take a region from the equally divided area shaped scanned carrier. Place this in one of the equally divided areas in the blank image. There are 16 possible positions. Repeat the process with the next data from the shaped scanned carrier. There are now 15 possible positions to place this. The rearrangement step allows the carrier data to have 16! (16 factorial or 20,922,789,888,000) different renditions. Additionally each of the carriers can be randomly flipped or rotated (in 90 degree increments) to make the counterfeiter's job even more difficult. The prescription of the placement steps can be perform in accordance with a key known only to the authentication authorities.

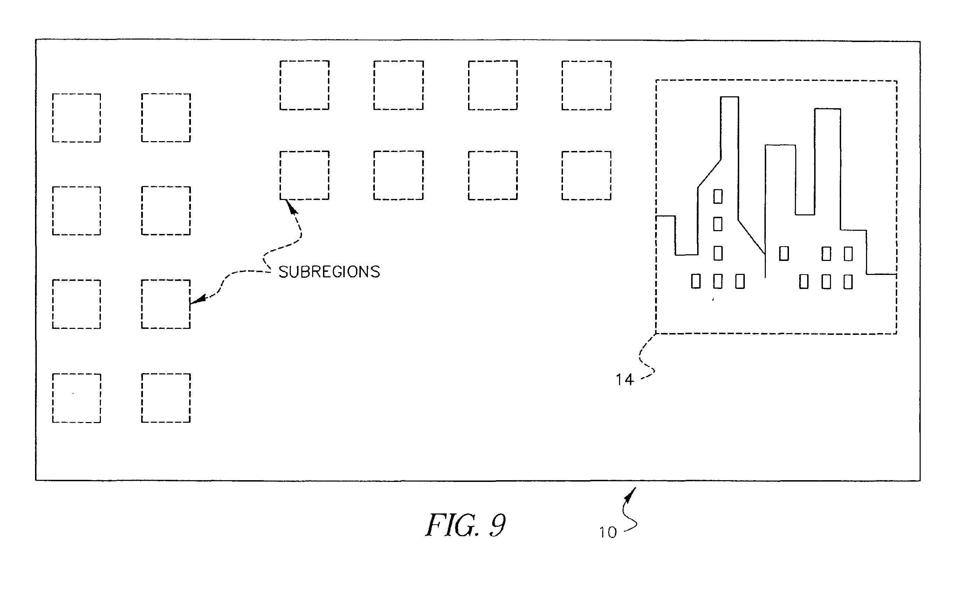

It is important to perform the rearrangement step after the shaping step. This is because the shaping step tends to normalize the scanned carriers local statistics. Dividing the carrier into regions without the shaping step causes a decrease in performance in the extraction process. As an alternative to the rearrangement step detailed above, FIG. 9 shows that subregions can be scanned from isolated regions separately. More particularly, the sixteen 64x64 subregions can be scanned from isolated regions separately.

As mentioned above, the objective of the shaping step as shown in FIG. 7 block 26 is to provide a carrier that maintains the fibrous character of the scan, but also to provide an efficient information carrying entity. The shaping step shown in block 30 of FIG. 7 will now be described in greater detail. The shaping of the amplitude spectrum (derived from the FFT data) is performed with respect to the human visual system and sharpness loss due to the printing process. The human visual system's role was described during the discussion of FIG. 2 above. Recall that except for near the DC frequency, we'd like to create a Fourier amplitude spectrum that is proportional the inverse CSF. A carrier derived in this manner can be improved on further by realizing that when printing an image on a receiver, the modulation transfer function (MTF) of the printer can be backed out before printing. (A function that expresses the ability of an optical or electronic device to transfer signals faithfully as a function of the spatial of the signal is commonly known as a modulation transfer function (MTF). The MTF is the ratio of the percentage modulation of a sinusoidal signal leaving to that entering the device over the range of frequencies of interest.)

Therefore except for the very low frequencies around DC, the Fourier amplitude should be proportional to:

$$MTF^{-1}_{printer}(u, v)CSF^{-1}_{viewing\ conditions}(u, v)$$

(u,v represent spatial frequencies of the two dimensional FFT)

It is important to note that the input data to the FFT is real. The input spatial imaginary component is comprised entirely of zeros. However, in the Fourier domain, there will be an imaginary component. After shaping we'd like to make sure that the inverse FFT provides a zero valued imaginary component. This ensures that energy defined in the FFT domain was not wasted. The concepts involved with ensuring that the inverse FFT is real is detailed in US-A-6,044,156.

Now, it is well known to those in the practice of image processing that the phase contains the important information in an image, maintaining this information for this application is of paramount importance. The phase information of the Fourier transform contains the bulk of fibrous structure information. Only the amplitude spectrum of the FFT data should be modified during this shaping process. The phase value at each Fourier frequency should always be maintained. Recall that Fourier phase is given by the equation:

$$\theta(u, v) = \tan^{-1}(\text{Imaginary}(F(u,v))/\text{Real}(F(u,v)))$$

Recall also that Fourier amplitude is given by the equation:

$$amplitude(u, v) = \sqrt{\text{Imaginary}(F(u,v))^2 + \text{Real}(F(u,v))^2}$$

If one were to multiply both Imaginaly(F(u,v)) and Real(F(u,v)) by $\alpha(u,v)$ the phase is maintained and the amplitude spectrum is modified. That is:

$$\theta(u,v) = \tan^{-1}(\alpha(u,v)\text{Imaginary}(F(u,v))/\alpha(u,v)\text{Real}(F(u,v))) = \tan^{-1}(\text{Imaginary}(F(u,v)/\text{Real}(F(u,v)))$$

$$\sqrt{\text{Imaginary}(\alpha(u,v)F(u,v))^2 + \text{Real}(\alpha(u,v)F(u,v))^2} = \alpha(u,v)amplitude(u,v)$$

Therefore, the modification of the Fourier amplitude spectrum can be performed by multiplying the real and the imaginary components of the Fourier transform by the scalar that gives us the desired amplitude. If,

$$\alpha(u, v) = MTF^{-1}_{\text{printer}}(u, v)CSF^{-1}_{\text{viewing conditions}}(u, v) / \sqrt{\text{Imaginary}(F(u,v))^2 + \text{Real}(F(u,v))^2}$$

Then, the shaping step is simply performed by multiplying each component of the real and imaginary Fourier coefficients by $\alpha(u,v)$, that is:

$$\text{Imaginary}(F_{\text{new}}(u,v)) = \alpha(u,v)\text{Imaginary}(F(u,v))$$

$$\text{Real}(F_{\text{new}}(u,v)) = \alpha(u,v)\text{Real}(F(u,v))$$

Turning now to FIG. 8, the shaped rearranged carrier shown in block 34 is convolved in block 36 with the message 24. The convolution disperses the message energy to form a secure dispersed message. The secure dispersed message is tiled across the user image by adding to form an embedded image in block 37. The embedded image 38 is printed as shown in block 40. The embedded image has a discernible physical characteristic and is then printed on the medium 10. In the specific embodiment described herein, the discernible physical characteristic of a receiver is the fibrous structure of the scanned region of the receiver. The receiver can be made of paper, plastic, porcelain, laminates, or combinations thereof. Experimentation has shown that error diffusion is preferable to traditional screening technologies. In the preferred embodiment an ink-jet printer prints the image using error diffusion at 300 or 600 dpi.

When it comes time to extract the message, a user may or may not have the carrier available. If the carrier is not known beforehand, then it becomes necessary to rescan it from the paper. In this case, assume that the location of the carrier (that is, the location of the fibrous region) is known in advance. The carrier is obtained by repeating the steps of FIG. 7. Typically, the scan of the fibrous area will have some level of rotation or scale inaccuracy. Because of this, it is useful to scan the embedded image first to determine via the autocorrelation technique described above, the amount of scale and rotation correction needed. Once the correction factors are known it is possible to get a more accurate estimate of the location of fibrous carrier needed to decode the message contained in the printed image.

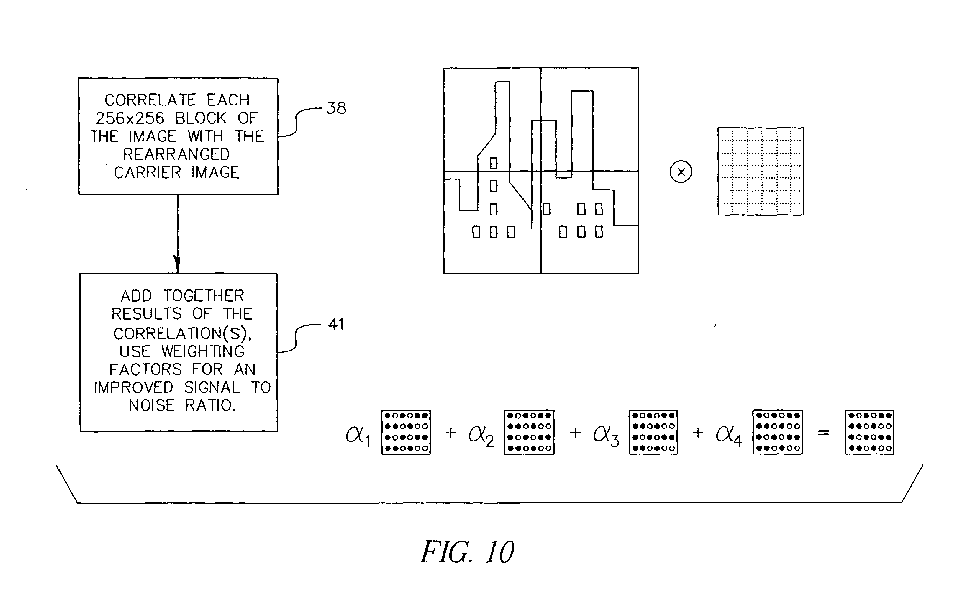

FIG. 10 depicts the process of extracting the embedded message from a tiled image on the receiver using weighted sums. To decode the message, the derived fibrous carrier FIG. 7, the rearranged shaped carrier shown in block 34 is correlated with sections of the scanned embedded image 14 as shown in block 38 of FIG. 10. Each correlated section is multiplied by a weighting scalar that depends on a calculated signal and noise value.

## Claims

1. A method for printing an authenticatable image having an embedded image into a receiver having a discernible physical characteristic, such that the printed image can be used to authenticate the receiver, comprising the steps of:

a) scanning the receiver to produce information related to the discernible physical characteristic of the receiver;

b) providing a carrier, which includes information, related to the scanned receiver discernible physical characteristic;

c) combining the carrier with an input image to form the authenticatable image having the embedded image; and

d) printing the authenticatable image having the embedded image onto the receiver.

2. The method of claim 1 wherein the discernible physical characteristic of the receive is the fibrous content of the receiver and the carrier is produced from scanning a predetermined region of the receiver.

3. The method of claim 3 wherein the carrier producing step includes:

i) transforming the carrier to a Frequency domain to form a transformed carrier;

ii) shaping the transformed carrier's spectrum to cancel the MTF of the print process or to facilitate the human visual system; and

iii) inverse transforming the transformed carrier.

4. The method of claim 1 wherein the carrier producing step further includes encrypting the carrier signal by rearranging portions of the carrier in accordance with a key.

5. A method of authenticating a receiver having an authenticatable image having an embedded image having information related to the discernible physical characteristic of the receiver, comprising the steps of:

a) scanning the authenticatable image on the receiver to produce information related to the discernible physical characteristic of the receiver; and

b) comparing the scanned discernible physical characteristic information with the discernible physical characteristic of an authentic receiver to determine the authenticity of the authenticatable image.

6. The method of claim 5 wherein the discernible physical characteristic of an authenticated receiver is determined by scanning a portion of the receiver on which the authenticatable image is formed.

7. The method of claim 5 wherein the discernible physical characteristic of the receiver is the fibrous content of the receiver and the carrier is produced from scanning a predetermined region of the receiver.

8. An authenticatable digital image, comprising:

a) an input image which will be visible to a viewer when the authenticatable image is printed; and

b) an embedded image in the input image and having a discernible physical characteristic related to the receiver into which the authenticatable image will be provided.

9. The method of claim 1 wherein the discernible physical characteristic of the receive is the fibrous content of the receiver and the carrier is produced from scanning a predetermined region of the receiver.

*FIG. 1*

*FIG. 2*

EP 1 173 001 A2

MDM 454
New York

+

MDM 454
New York

=

MDM 454
New York

ORIGINAL

EMBEDDED
MESSAGE

ORIGINAL WITH
EMBEDDED IMAGE

*FIG. 3*

CONTRADICTION

MDD 454
New York

MDM 454
New York

COUNTERFEIT

EXTRACTED
MESSAGE

*FIG. 4*

EP 1 173 001 A2

EP 1 173 001 A2

*FIG. 5*

*FIG. 6*

SCAN (256 PIXEL X 256 LINE) REGION AT 1200 DPI

26

FFT

28

SHAPE SCANNED REGION IN THE FREQUENCY DOMAIN

30

FFT$^{-1}$

32

34

REARRANGE SUBREGIONS OF SCANNED (256 PIXEL X 256 LINE) REGION IN ACCORDANCE WITH A KEY

*FIG. 7*

24        34

*

14

CONVOLVE MESSAGE IMAGE WITH REARRANGED CARRIER IMAGE TO FORM A SECURE DISPERSED MESSAGE

36

TILE AND ADD SECURE DISPERSED MESSAGE TO USER IMAGE TO FORM AN EMBEDDED IMAGE

37

PRINT AT 300 OR 600 DPI

40

*FIG. 8*

*FIG. 9*

SUBREGIONS

10

14

EP 1 173 001 A2

*FIG. 10*